# EUROPEAN PATENT APPLICATION

(11) **EP 2 059 047 A1**
(43) Date of publication of application: **13.05.2009**
(21) Application number: 08167703.1
(22) Date of filing: 28.10.2008
(51) Int. Cl.: H04N 7/26, H04N 7/64, H04N 7/68

(54) **Bit stream processing apparatus and bit stream processing method**

(30) Priority: 12.11.2007 JP 2007292879
(71) Applicant: NEC Electronics Corporation, Kawasaki, Kanagawa 211-8668 (JP)
(72) Inventor: Goan, Shinpachirou c/o NEC Electronics Corporation, Kawasaki Kanagawa 211-8668 (JP)
(74) Representative: Betten & Resch

(57) **Abstract**

Three antennas receive broadcasting signals from the same station. A demultiplexer 120 carries out demultiplex processes on video signals received by the three antennas, and obtains three bit streams and an error rate for each bit stream. A decoder 130 decodes each of the bit streams to obtain three decoded data, and also obtains a BER value (Bit Error Rate) for each picture obtained in the decoding. A CPU 150 selects the decoded data of bit streams having transmission quality equal to or higher than a predetermined reference quality based on the error rates obtained by the demultiplexer 120, obtains the transmission quality for each picture, for the selected decoded data, based on the BER value from the decoder 130, and selects the picture having the highest transmission quality from among pictures that correspond to each other among the selected decoded data.

## Description

### BACKGROUND

### 1. Field of the Invention

The present invention relates to a processing technique of a bit stream, specifically a bit stream that is compressed image data.

### 2. Description of Related Art

In general, moving image data is transmitted/received or stored in a state where the moving image data is compressed in a compression technology specifies by a compression standard such as the MPEG (Motion Picture Expert Group) standard. To reproduce such moving image data, a decoding process needs to be carried out. A reproduction of a bit stream data that is compressed moving image data is explained hereinafter, taking MPEG as an example.

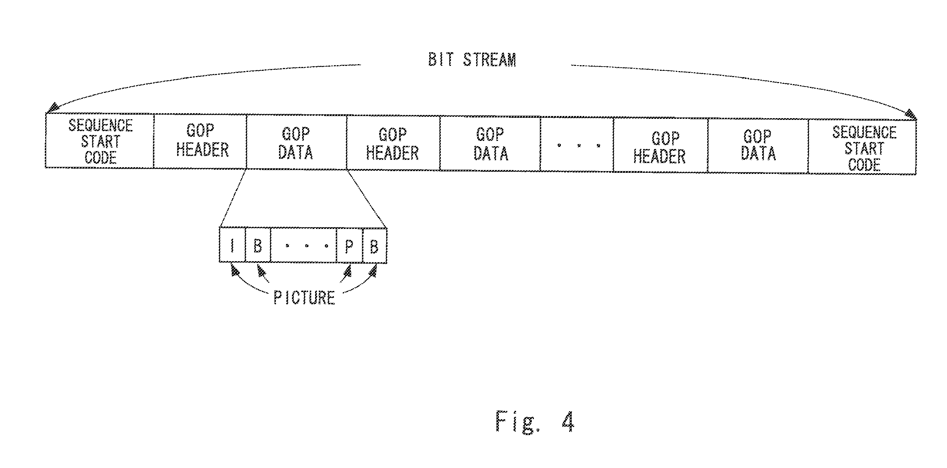

Fig. 4 shows a structure of a MPEG video sequence. In the MPEG standard, a hierarchal structure having a sequence layer as the uppermost layer is adopted, and a GOP (Group of Picture), which is a group of a plurality of pictures, appears repeatedly in the sequence. As shown in the figure, a plurality of GOPs are arranged in sequence between the sequence start code and the sequence end code in the video sequence, and a GOP header, which is used to find the beginning of pictures for random access or a similar process, is provided at the head of each GOP.

One or more pictures are contained in each GOP. These pictures include three types of pictures, i.e., I-pictures, P-pictures, and B-pictures.

The I-picture is image data that is generated by intra-frame encoding, and one image can be reconstructed from the I-picture itself in decoding.

The P-picture is image data that is generated by forward reference encoding in which the difference from data that is estimated from a past frame (I-picture or P-picture) is encoded, and the decoding of the P-picture requires referring to that past I-picture or P-picture.

The B-picture is image data that is generated by forward and backward reference encoding in which the difference from data that is estimated from past and future frames (I-pictures or P-pictures) is encoded, and the decoding of the B-picture requires referring to that past and future I-pictures or P-pictures.

An error sometimes occurs due to a transmission environment or the like in the transmission of a bit stream using the MPEG technology. There is a problem that the reproduction of pictures without correcting such an error leads to degradation in displayed images, e.g., the occurrence of noise in the reproduced images. Especially in the case of the above-described I-pictures or P-pictures, since they are referred to from other pictures for decoding, an error occurring in an I-picture or a P-picture not only has an adverse effect on that picture itself, but also may spread adverse effects to other pictures in the same GOP and even to some pictures in the next GOP. Therefore, when an error occurs in an I-picture or a P-picture, the disturbance in reproduce images may be larger than that in the case where an error occurs in a B-picture.

Some attempts have been practiced to minimize, at the occurrence of an error in a bit stream, image degradation caused by that error. For example, Japanese Unexamined Patent Application Publication No. 8-154247 (Patent document 1) discloses a technique in which when an error is detected in the decoding of a MPEG bit stream, the data of that error potion is replaced with the data of the corresponding portion of another picture in the same bit stream.

### SUMMARY

In recent years, owing to the spread of terrestrial digital broadcasting and performance improvements in mobile terminals, the television broadcast is not limited to the reception by fixed terminals installed indoors, but has been received by such mobile terminals. When it is received, in particular, by such a mobile terminal, errors tend to occur in received data because satisfactory reception may not be achieved due to the effects of phasing and multipath.

The technique of the Patent document 1, when an error is detected, replaces the data of that error portion with data of another picture in the same bit stream. However, when the overall receiving quality of a bit stream is unsatisfactory, e.g., when it is received by a mobile terminal, the data of other pictures in the same bit stream may be also unsatisfactory. Therefore, the effectiveness for improving images is limited. Furthermore, the replacement itself in which a portion of a picture is replaced with a portion of another picture may also give unnaturalness or a similar adverse effect to images.

In accordance with one aspect, the present invention provides a bit stream processing apparatus wherein the bit stream is compressed moving image data. The bit stream processing apparatus includes a plurality of receive potions, a decoder, and a picture select portion.

The plurality of receive potions each receive a first bit stream that is compressed moving image data, and the decoder decodes the first bit stream received by each of the plurality of receive potions to obtain decoded data for each of the received first bit streams.

The picture select portion compares first transmission quality of a plurality of pictures that correspond to each other among the decoded data, and selects the picture having the highest first transmission quality from among the plurality of pictures. This "first transmission quality" means transmission quality on a picture basis.

Note that entities representing above-described apparatus as systems and computer programs are also included in the aspects of the present invention.

A technique in accordance with the present invention can improve reproduction quality when a bit stream that is compressed moving image data is received and reproduced.

### BRIEF DESCRIPTION OF THE DRAWINGS

The above and other objects, advantages and features of the present invention will be more apparent from the following description of certain exemplary embodiments taken in conjunction with the accompanying drawings, in which:
Fig. 1 shows a video receiving system in accordance with a first embodiment of the present invention;
Fig. 2 is a figure for illustrating picture selection carried out by the video receiving system shown in Fig. 1;
Fig. 3 is a flowchart showing the flow of processes carried out by the video receiving system shown in Fig. 1; and
Fig. 4 shows the video sequence of a bit stream in a MPEG format.

### DETAILED DESCRIPTION OF THE EXEMPLARY EMBODIMENTS

Exemplary embodiments in accordance with the present invention are explained hereinafter with reference to the drawings.

### First exemplary embodiment

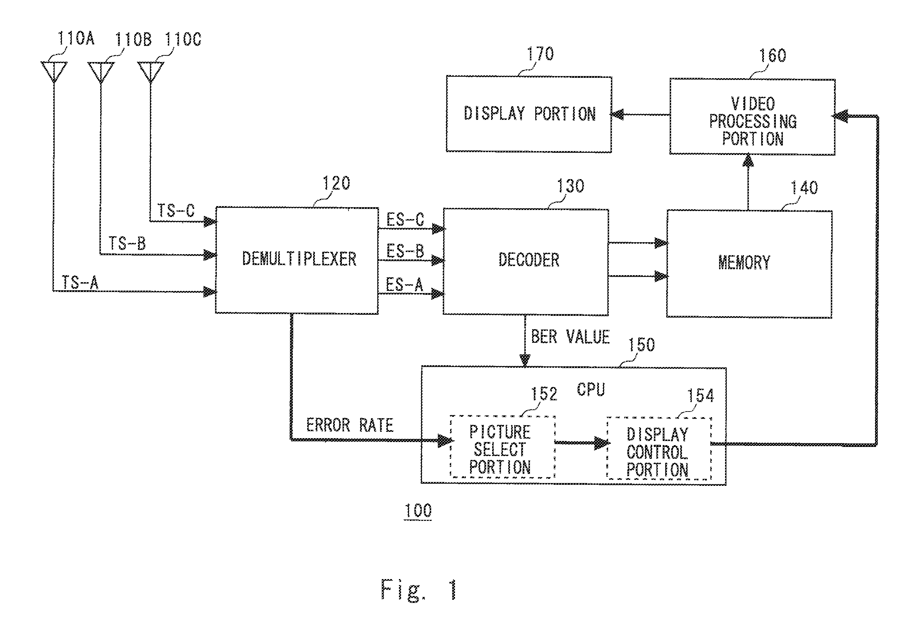

Fig. 1 shows a video receiving system 100 in accordance with an exemplary embodiment of the present invention. The video receiving system 100 is to receive digital broadcasting signals, and includes a plurality of antennas (three antennas 110A, 110B, and 110C in an example shown in the figure), a demultiplexer 1.20, a decoder 130, a memory 140, a CPU (Central Processing Unit) 150, a video processing portion 160, and a display portion 170. Note that other portions that are usually provided in a receive apparatus for digital broadcasting but are not related to video processing, such as portions for audio processing, are omitted as appropriate in the following explanation in order to facilitate the understanding of the gist of the present invention. Furthermore, the flows of video data are represented by narrow-line arrows, and the flows of other data such as control signals are represented by bold-line arrows.

The antennas 110A - 110C are to receive broadcasting signals that are multiplexed signals, and receive signals from the same broadcasting station. For example, the multiplexed signals, are signals in conformity with the MPEG-2 system standard, and created by multiplexing compressed signals.

The demultiplexer 120 is capable of carrying out demultiplex processes for signals in multiple channels in parallel. An Fig. 1, the demultiplexer 120 demultiplexes each of the multiplexed signals received by the antennas 110A - 110C, and obtains three respective bit streams. The bit streams obtained by the demultiplexer 120 are compressed moving images in conformity with the MPEG-2 standard.

A briefly explanation of the MPEG-2 system is given hereinafter.

In the MPEG-2 system, compressed video and audio are referred to as "ES (Elementary stream) ", and the packets created by divining the ES into appropriately sized pieces are referred to as "PES (Packetized Elementary Stream)". Furthermore, although there is no specific definition on the unit for dividing in the MPEG-2 system, video data is usually divided on a picture basis.

In the MPEG-2 system, two types of format, i.e., PS (Program stream) and TS (transport stream), in which the PES is multiplexed for transmission or storage, are defined. PS ifs a format that is used with an assumption that a single program is handled in an environment such as storage media where the provability of errors is small, and TS is a format that is used with an assumption that more than one programs are simultaneously handled in an environment where errors can occurs. In general, TS is adapted in digital broadcasting.

In the case of TS, PES packets are divided into transport packets (TS packets), and a series of these transport packets constitutes a transport stream. Each TS packet contains a packet identifier called "PID", and the same pictures have the same PIDs. Therefore, elementary streams can be restored from transport streams by referring the PIDs in a demultiplex process on a receiving side.

Furthermore, the header of each transport packet has a 4-bit counter called "continuity_counter", the value of which is incremented one by one throughout the same PIDs, so that the error rate of the transport packets can be obtained by detecting discontinuity in the countess and summing up the number of lost packets in the transport stream in a demultiplex process on a receiving side. This error rate can indicates the transmission quality of a transport stream.

The demultiplexer 120 carries out demultiplex processes on transport stream TS-A, TS-B, and TS-C, which are received by the antennas 110A, 110B, and 110e respectively, and obtains three elementary streams ES-A, ES-B, and ES-C. The demultiplexer 120 outputs these three elementary streams to the decoder 130, and also outputs the error rate obtained for each streams in the demultiplex process to the CPU 150.

The decoder 130 decodes the three elementary streams, and obtains decoded data for each elementary stream. Furthermore, the decoder 130 outputs the error rate obtained for each picture in the decoding to the CPU 150. This error rate is a BER (Bit Error Rate) value. To distinguish between the error rate obtained for each picture by the decoder 130 and the error rate obtained for each stream by the demultiplexer 120, the error rate obtained for each picture by the decoder 130 is referred to as "BER value" and the error rate obtained for each stream by the demultiplexer 120 is simply referred to as "error rate" in the following explanation.

The CPU 150 includes two functions, i.e., a picture select portion 152 and a display control portion 154. The picture select portion 152 first selects only decoded data of elementary streams for which the error rates are equal to or less than a first threshold value representing predetermined reference quality, i.e., decoded data of elementary streams whose transmission quality satisfies the reference quality, based on the error rates obtained by the demultiplexer 120, and stores them in the memory 140. In the example shown in Fig. 1, decoded data for only two elementary streams among the three elementary streams ES-A, ES-B, and ES-C are selected and stored in the memory 140. Furthermore, assume that the decoded data for the elementary streams ES-A and ES-B, for example, are selected for the convenience of the explanation. Then, the picture select portion 152 compares the transmission quality of each picture contained in the decoded data of the bit stream ES-A with that of a corresponding picture contained in the decoded data of the bit stream ES-B. The pictures corresponding to each other between two bit streams are pictures having the same PIDs.

The comparison of transmission quality is carried out by using BER values from the decoder 130. The BER value of a picture can be used as an indicator indicating the transmission quality of that picture, and a larger BER value of a picture indicates lower transmission quality of that picture. The picture select portion 152 compares the BER values between the corresponding pictures, and selects the picture having the lowest BER value, i.e., the picture having the highest transmission quality.

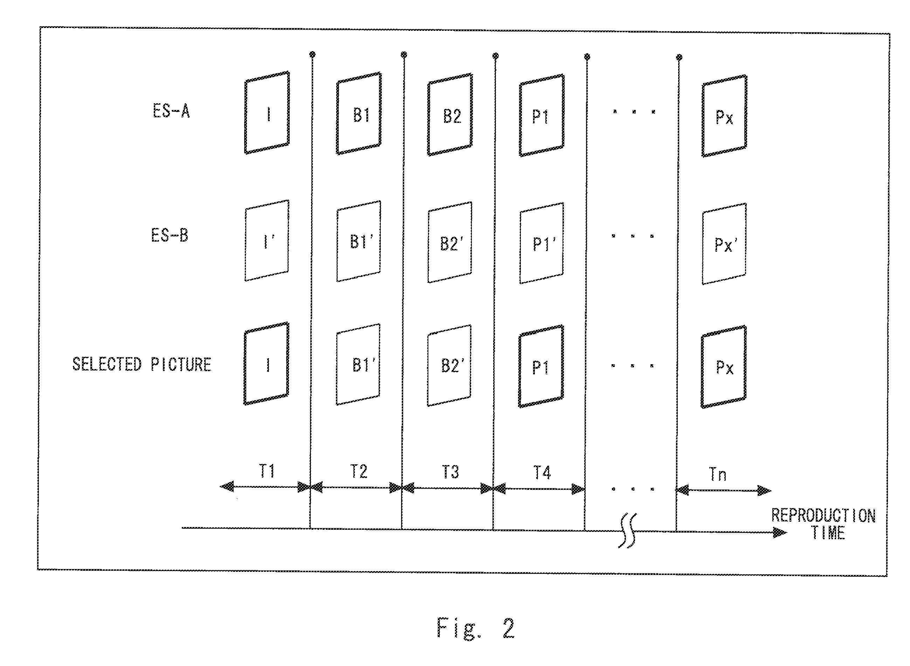

Specific selecting operations by the picture select portion. 152 are explained hereinafter with reference to Fig. 2. Fig. 2 shows the structure of elementary streams (ES-A and ES-B) corresponding to the decoded data selected by the picture select portion 152 based on the error rates from the demultiplexer 120. These two elementary streams are encoded moving images. In particular, the ES-A is demultiplexer from the transport stream TS-A received at the antenna 110A by the demultiplex process, and the ES-B is demultiplexer from the transport stream TS-B received at the antenna 110B by the demultiplex process. Since the ES-A. and the ES-B are in conformity with the MPEG standard, I-pictures, B-pictures, and P-pictures are arranged in order of reproduction time as shown in the figure. Note that, in Fig. 2, pictures are represented by quadrangles. In particular, pictures of the ES-A are represented by bold-line quadrangle, and pictures of the ES-B are represented by narrow-line quadrangles.

The relations between the elementary streams ES-A and ES-B and the corresponding selected pictures are shown in the lower part of Fig. 2. In the illustrated example, I-picture "I", P-picture "P1", and P-picture "Px" from the bit stream ES-A are selected in the reproduction time periods T1, T4, and Tn respectively, and B-picture "B1'" , and B-picture "B2'" from the bit stream ES-B are selected in the reproduction time periods T2 and T3 respectively. Note that pictures in the same reproduction time periods are "pictures corresponding to each other", i.e., "pictures having the same PIDs" in the specification of the present application.

If two pictures having the same PIDs have the same level of transmission quality, either one of the pictures can be selected. A specific manner of such selection may be left to the discretion of a system designer. For example, a picture from a bit stream that enters to the decoder 130 prior to the other stream may be selected.

The display control portion 154 controls whether pictures selected by the picture select portion 152 should be displayed or not. Specifically, it confirms the BER value of a picture selected by the picture select portion 152, and outputs a signal indicating that picture (which is called "select signal" hereinafter) to the video processing portion 160 when that. BER value is equal to or less than a second threshold value representing predetermined reference quality, i,e., when the transmission quality of that picture satisfies the reference quality. On the other hand, when the transmission quality of the picture selected by the picture select portion 152 is below the reference quality, the display control portion 154 outputs a signal indicating that "the picture should not be displayed" to the video processing portion 160.

The video processing portion 160, which operates in accordance with a signal from the CPU 150, more specifically a signal from the display control portion 154, reads out the picture indicated by the select signals and carries out image processing to display it at the display portion 170. In the image processing, it does not display a picture for which the signal from the CPU 150 indicates that "it should not be displayed", and refers to the immediately preceding picture instead.

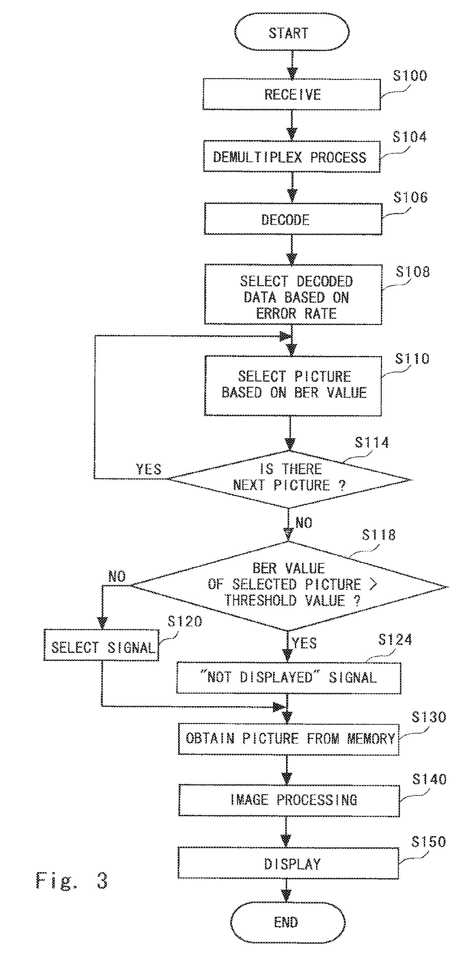

Fig. 3 is a flowchart showing the flow of processes carried out in the video receiving system 100. As shown in the figure, each of the three antennas 110A - 110C receives a broadcasting signal from the same station, and obtains transport streams TS-A, TS-B, and TS-C (S100).

The demultiplexer 120 carries out demultiplex processes on the transport streams TS-A, TS-B, and TS-C to obtain elementary streams ES-A, ES-B, and ES-C, and also obtains an error rate for each stream (S104). The demultiplexer 120 outputs the three elementary streams to the decoder 130, and also outputs the error rates to the CPU 150.

The decoder 130 decodes the three elementary streams to obtain their respective decoded data, and outputs a BER value obtained for each picture in the decoding to the CPU 150 (S106) .

The picture select portion 152 in the CPU 150 first selects the decoded data of elementary streams for which the error rates from the demultiplexer 120 are equal to or less than a first threshold value, and stores them in the memory 140 (S108).

Then, the picture select portion 152 selects, in regard to the decoded data stored in the memory 140, the picture having the highest transmission quality from among pictures having the same PIDs based on the BER values from the decoder 130 (S110) . Note that when all pictures having the same PIDs have the same level of transmission quality, a picture is selected in a manner in accordance with the system design.

The picture select portion 152 repeats the above-described selection at the step S110 until the selection is completed for all pictures contained in one GOP (Yes at S114 and S110 and so on).

When the selection for the last picture in that GOP is finished (No at S114), the display control portion 154 in the CPU 150 confirms the BER value for each picture (S118). Then, the display control portion 154 outputs, for pictures whose BER values are equal tao or less than a second threshold value, the select signals indicating those pictures to the video processing portion 160 (No at S118 and S120). In addition, the display control portion 154 also outputs, for the remaining pictures, signal indicating that "they should not be displayed" to the video processing portion 160 (Yes at S118 and S124).

The video processing portion 1.0 reads out the pictures indicated by the select signals from the display control portion 154 and carries out image processing to display them at the display portion 170 (S130, S140, and S150). Note that, in the image processing at the step S140, it does not display a picture for which the signal from the display control portion 154 indicates that "it should not be displayed", and refers to the immediately preceding picture instead.

As explained above, the video receiving system 100 in accordance with this embodiment receives a digital broadcasting signal from the same station at each of the three antennas, demultiplexes the received three transport streams to obtain elementary streams, selects, in regard to the decoded data of elementary streams selected from the obtained elementary streams, a picture having higher transmission quality from among pictures having the same PIDs by using the transmission equality on a picture basis, and uses it for display. In this manner, it is possible to obtain video pictures having higher quality in comparison with those in a conventional technique in which data of a pictures where an error occurs is replaced with corresponding data of another picture in the same elementary stream.

Furthermore, when decoded data is selected before selecting a picture, the decoded data are selected for only elementary streams that satisfy reference quality based on transmission quality on an elementary stream basis. In this manner, decoded data of a transport stream having relatively low overall transmission quality are eliminated from decoded data from which pictures are selected. Therefore, the number of decoded data on which the selection process is carried out to select pictures can be reduced, so that the process can be carried out with efficiency and the quality of selected pictures is assured.

Furthermore, it is possible to compare transmission quality on a GOP basis to select the GOP to be displayed from among GOPs that correspond to each other. However, even if the overall transmission quality of a GOP is unsatisfactory, it does not necessarily mean that the transmission quality of all pictures contained in that GOP is unsatisfactory. Therefore, the video receiving system 100 in accordance with this embodiment can acquire video pictures having higher quality by carrying out the comparison of transmission quality and the selection of pictures on a picture basis, rather than by carrying out the comparison of transmission quality and the selection of pictures on a GOP basis. Second exemplary embodiment

Another exemplary embodiment in accordance with the present invention is different from the previous exemplary embodiment in that when a picture having a BER value higher than a predetermined threshold value (the above-mentioned second threshold value) is detected in the process by the decoder 130, that picture is discarded so as not to be stored in the memory 140. That is, the memory 140 stores only pictures that have transmission quality acceptable for display. In this manner, the picture select portion 152 in the CPU 150 selects a picture having higher transmission quality when more than one picture having the same PIDs are stored in the memory 140, but does not carry out the comparison of transmission quality when only one picture having the particular PID is stored, and simply picks up that picture. Furthermore, the display control portion 154 does not need to confirm the transmission quality of selected pictures.

Since pictures having lower transmission quality are not stored in the memory, this video receiving system can reduce the amount of necessary memory. Furthermore, since the amount of data to be processed by the CPU can be reduced, the processing load for the CPU can be also reduced.

Hereinbefore, the present invention has been explained with embodiments. The embodiments are explained just for the illustrative purpose, and various modification, addition, and elimination are can be made without departing from the spirit of the present invention.

While the invention has been described in terms of several exemplary embodiments, those skilled in the art will recognize that the invention can be practiced with various modifications within the scope of the appended claims and the invention is not limited to the examples described above.

Further, the scope of the claims is not limited by the exemplary embodiments described above.

Furthermore, it is noted that, Applicant's intent is to encompass equivalents of all claim elements, even if amended later during prosecution.

An exemplary embodiment of the present invention may be summerised as follows.
Three antennas receive broadcasting signals from the same station. A demultiplexer 120 carries out demultiplex processes on video signals received by the three antennas, and obtains three bit streams and an error rate for each bit stream. A decoder 130 decodes each of the bit streams to obtain three decoded data, and also obtains a BER value (Bit Error Rate) for each picture obtained in the decoding. A CPU 150 selects the decoded data of bit streams having transmission quality equal to or higher than a predetermined reference quality based on the error rates obtained by the demultiplexer 120, obtains the transmission quality for each picture, for the selected decoded data, based on the BER value from the decoder 130, and selects the picture having the highest transmission quality from among pictures that correspond to each other among the selected decoded data.

## Claims

1. A bit stream processing apparatus comprising:
a plurality of received potions each to receive a first bit stream, the first bit stream being compressed moving image data;
a decoder to decode the first bit stream received by each of the plurality of receive portions to obtain decoded data for each of the received first bit streams; and
a picture select portion to compare first transmission quality of a plurality of pictures corresponding to each other among the decoded data, and select a picture having the highest first transmission quality from among the plurality of pictures, the first transmission quality being transmission quality on a picture basis.

2. The bit stream processing apparatus according to Claim 1, wherein the picture select portion uses an error rate obtained for each picture in the decoding by the decoder as an indicator indicating the first transmission quality, makes comparisons among the error rates of the plurality of picture corresponding to each other, and selects a picture having the lowest error rate from among the plurality of pictures.

3. The bit stream processing apparatus according to Claim 2, wherein:
the first bit stream is in conformity with a MPEG (Motion Picture Expert Group) standard; and
the error rate is a BER (Bit Error Rate) value.

4. The bit stream processing apparatus according to one of Claims 1 to 3, further comprising a display control portion to carry out control such that when the transmission quality of a picture selected by the picture selects portion is equal to or higher than a predetermined first reference quality, that picture is displayed and when the transmission quality of the picture is lower than the predetermined first reference quality, that picture is not displayed.

5. The bit stream processing apparatus according to one of Claims 1 to 4, further comprising a demultiplexer arranged between the plurality of receive portions and the decoder,
wherein the plurality of receive portions each receive a second bit stream, the second bit stream being multiplexed signals;
the demultiplexer carries out a demultiplex process on the multiplexed signals received by each of the plurality of receive portions to obtain the first bit stream for each of the received multiplexed signal and provide the obtained first bit streams to the decoder; and
the picture select portion selects a picture from the decoded data corresponding to the first bit stream for which second transmission quality satisfies a predetermined second reference quality or higher quality among the first bit stream obtained by the demultiplexer, the second transmission quality being transmission quality on a bit stream basis.

6. The bit stream processing apparatus according to Claim 5, wherein the picture select portion uses an error rate obtained for each bit stream in the demultiplex process as an indicator indicating the second transmission quality of the first bit stream.

7. A bit stream processing method comprising:
receiving a first bit stream by each of a plurality of receive portions, the first bit streams being the same compressed moving image data;
decoding the first bit stream received in each of the plurality of receive portions and obtaining decoded data for each of the received first bit streams; and
selecting, by comparisons among first transmission quality, a picture having the highest first transmission quality from among a plurality of pictures corresponding to each other among the decoded data, the first transmission quality being transmission quality an a picture basis.

8. The bit stream processing method according to Claim 7, wherein the decoded data for: each of the received first bit streams is obtained by decoding the first bit stream selected from among the first bit streams received by the plurality of receive portions based on second transmission quality, the second transmission quality being transmission quality on a bit stream basis.
